(19) Europäisches Patentamt
European Patent Office
Office européen des brevets

(11) **EP 1 125 370 B1**

(12) **EUROPÄISCHE PATENTSCHRIFT**

(45) Veröffentlichungstag und Bekanntmachung des Hinweises auf die Patenterteilung:
**09.02.2005 Patentblatt 2005/06**

(21) Anmeldenummer: **99957926.1**

(22) Anmeldetag: **27.10.1999**

(51) Int Cl.⁷: **H04B 1/707**

(86) Internationale Anmeldenummer:
**PCT/DE1999/003365**

(87) Internationale Veröffentlichungsnummer:
**WO 2000/025437 (04.05.2000 Gazette 2000/18)**

(54) **RAKE-EMPFÄNGER IN MOBILFUNKSYSTEMEN DER DRITTEN GENERATION**

RAKE RECEIVER IN THIRD GENERATION MOBILE RADIOTELEPHONE SYSTEMS

RECEPTEUR DE RAKE DANS DES SYSTEMES RADIOTELEPHONIQUES MOBILES DE LA TROISIEME GENERATION

(84) Benannte Vertragsstaaten:
**DE FR GB IT**

(30) Priorität: **27.10.1998 DE 19849556**

(43) Veröffentlichungstag der Anmeldung:
**22.08.2001 Patentblatt 2001/34**

(73) Patentinhaber: **SIEMENS AKTIENGESELLSCHAFT**
**80333 München (DE)**

(72) Erfinder:
• **FALKENBERG, Andreas**
**D-58093 Hagen (DE)**
• **BRAAM, Reinhold**
**D-45731 Waltrop (DE)**
• **ROHE, Christoph**
**D-44803 Bochum (DE)**

(56) Entgegenhaltungen:
**GB-A- 2 300 545       US-A- 5 654 979**
**US-A- 5 710 768**

**Beschreibung**

Die Erfindung bezieht sich auf einen Rake-Empfänger für Telekommunikationssysteme mit drahtloser Telekommunikation zwischen mobilen und/oder stationären Sende-/Empfangsgeräten mit einer Pipeline-Architektur, mit drei Pipeline-Stufen, in denen die einzelnen Signalverarbeitungsschritte bzw. Rechenschritte wie am Fließband abgearbeitet werden.

Ein solcher Rake-Empfänger ist beispielsweise aus der US 5,654,979 A bekannt, wobei ein nach einem Pipeline-Verfahren arbeitender Demodulationsprozessor eingesetzt wird, der mehrere Pipeline-Stufen aufweist.

Telekommunikationssysteme mit drahtloser Telekommunikation zwischen mobilen und/oder stationären Sende-/Empfangsgeräten sind spezielle Nachrichtensysteme mit einer Nachrichtenüber tragungsstrecke zwischen einer Nachrichtenquelle und einer Nachrichtensenke, bei denen beispielsweise Basisstationen und Mobilteile zur Nachrichtenverarbeitung und -übertragung als Sende- und Empfangsgeräte verwendet werden und bei denen

1) die Nachrichtenverarbeitung und Nachrichtenübertragung in einer bevorzugten Übertragungsrichtung (Simplex-Betrieb) oder in beiden Übertragungsrichtungen (Duplex-Betrieb) erfolgen kann,
2) die Nachrichtenverarbeitung vorzugsweise digital ist,
3) die Nachrichtenübertragung über die Fernübertragungsstrecke drahtlos auf der Basis von diversen Nachrichtenübertragungsverfahren FDMA (Frequency Division Multiple Access), TDMA (Time Division Multiple Access) und/oder CDMA (Code Division Multiple Access) - z.B. nach Funkstandards wie

DECT [Digital Enhanced (früher: European) Cordless Telecommunication; vgl. *Nachrichtentechnik Elektronik 42 (1992) Jan./Feb. Nr. 1, Berlin, DE; U. Pilger "Struktur des DECT-Standards", Seiten 23 bis 29* in **Verbindung** mit der ETSI-Publikation *ETS 300175-1 ...9, Oktober 1992* und der DECT-Publikation des *DECT-Forum, Februar 1997, Seiten 1 bis 16],*

GSM [Groupe Speciale Mobile oder Global System for Mobile Communication; vgl. *Informatik Spektrum 14 (1991) Juni, Nr. 3, Berlin, DE;* A.Mann: "Der *GSM-Standard - Grundlage für digitale europäische Mobilfunknetze", Seiten 137 bis* 152 in **Verbindung mit** der Publikation *telekom praxis 4/1993, P.Smolka "GSM-Funkschnittstelle - Elemente und Funktionen", Seiten 17 bis 24*],

UMTS [Universal Mobile Telecommunication System; vgl. **(1)**: *Nachrichtentechnik Elektronik, Berlin 45, 1995, Heft 1, Seiten 10 bis 14 und Heft 2, Seiten 24 bis 27; P. Jung, B.Steiner: "Konzept eines CDMA-Mobilfunksystems mit gemeinsamer Detektion für die dritte Mobilfunkgeneration"; (2) : Nachrichtentechnik Elektronik, Berlin 41, 1991, Heft 6, Seiten 223 bis 227 und Seite 234; P.W. Baier, P.Jung, A.Klein: "CDMA - ein günstiges Vielfachzugriffsverfahren für frequenzselektive und zeitvariante Mobilfunkkanäle"; (3): IEICE Transactions on Fundamentals of Electonics, Communications and Computer Sciences, Vol. E79-A, No. 12, December 1996, Seiten 1930 bis 1937; P.W.Baier, P. Jung: "CDMA Myths and Realities Revisited"; (4) : IEEE Personal Communications, February 1995, Seiten 38 bis 47; A. Urie, M.Streeton, C.Mourot: "An Advanced TDMA Mobile Access System for UMTS"; (5) : telekom praxis, 5/1995, Seiten 9 bis 14; P.W.Baier: "Spread-Spectrum-Technik und CDMA - eine ursprünglich militärische Technik erobert den zivilen Bereich"; (6): IEEE Personal Communications, February 1995, Seiten 48 bis 53; P.G.Andermo, L.M.Ewerbring: "An CDMA-Based Radio Access Design for UMTS"; (7) : ITG Fachberichte 124 (1993), Berlin, Offenbach: VDE Verlag ISBN 3-8007-1965-7, Seiten 67 bis 75; Dr. T.Zimmermann, Siemens AG: "Anwendung von CDMA in der Mobilkommunikation"; (8): telcom report 16, (1993), Heft 1, Seiten 38 bis 41; Dr. T. Ketseoglou, Siemens AG und Dr. T.Zimmermann, Siemens AG: "Effizienter Teilnehmerzugriff für die 3. Generation der Mobilkommunikation - Vielfachzugriffsverfahren CDMA macht Luftschnittstelle flexibler"; (9): Funkschau 6/98: R. Sietmann "Ringen um die UMTS-Schnittstelle", Seiten 76 bis 81]* WACS oder PACS, IS-54, IS-95, PHS, PDC etc. [vgl. IEEE Communications Magazine, January 1995, Seiten 50 bis 57; D.D. Falconer et al:"Time Division Multiple Access Methods for Wireless Personal Communications"]

erfolgt.

"Nachricht" ist ein übergeordneter Begriff, der sowohl für den Sinngehalt (Information) als auch für die physikalische Repräsentation (Signal) steht. Trotz des gleichen Sinngehaltes einer Nachricht - also gleicher Information - können unterschiedliche Signalformen auftreten. So kann z.B. eine einen Gegenstand betreffende Nachricht

(1) in Form eines Bildes,
(2) als gesprochenes Wort,
(3) als geschriebenes Wort,
(4) als verschlüsseltes Wort oder Bild übertragen werden.

Die Übertragungsart gemäß (1) ... (3) ist dabei normalerweise durch kontinuierliche (analoge) Signale charakterisiert, während bei der Übertragungsart gemäß (4) gewöhnlich diskontinuierliche Signale (z.B. Impulse, digitale Signale) entstehen.

Im UMTS-Szenario (3. Mobilfunkgeneration bzw. IMT-2000) gibt es z.B. gemäß der Druckschrift *Funkschau 6/98: R.Sietmann "Ringen um die UMTS-Schnittstell*e", *Seiten 76 bis 81* zwei Teilszenarien. In einem ersten Teilszenario wird der lizensierte koordinierte Mobilfunk auf einer WCDMA-Technologie (Wideband Code Division Multiple Access) basieren und, wie bei GSM, im FDD-Modus (Frequency Division Duplex) betrieben, während in einem zweiten Teilszenario der unlizensierte unkoordinierte Mobilfunk auf einer TD-CDMA-Technologie (Time Division-Code Division Multiple Access) basieren und, wie bei DECT, im TDD-Modus (Frequency Division Duplex) betrieben wird.

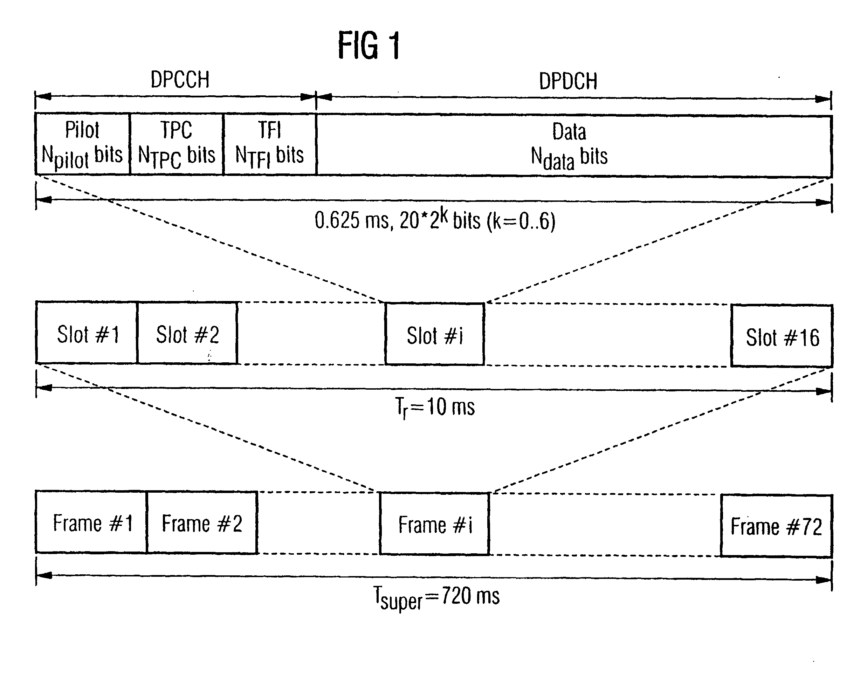

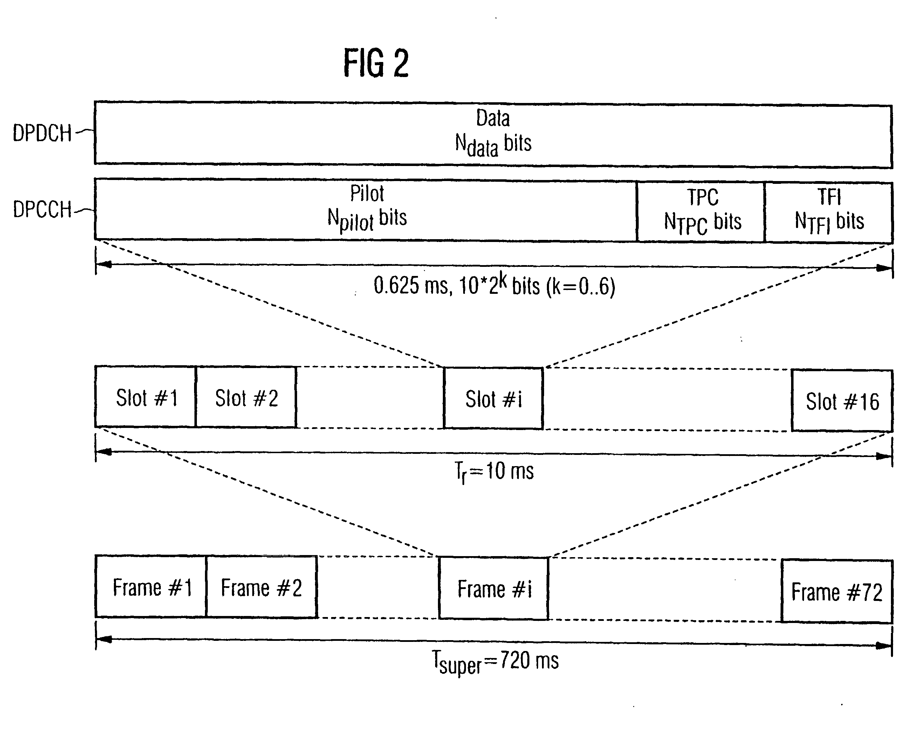

Für den WCDMA/FDD-Betrieb des Universal-Mobil-Telekommunikation-Systems enthält die Luftschnittstelle des Telekommunikationsystems in Auf- und Abwärtsrichtung der Telekommunikation gemäß der Druckschrift *ETSI STC SMG2 UMTS-L1, Tdoc SMG2 UMTS-L1 163/98: "UTRA Physical Layer Description FDD Parts" Vers. 0.3, 1998-05-29* jeweils mehrere physikalische Kanäle, von denen ein erster physikalischer Kanal, der sogenannte Dedicated Physical Control CHannel DPCCH, und ein zweiter physikalischer Kanal, der sogenannte Dedicated Physical Data CHannel DPDCH, in bezug auf deren Zeitrahmenstrukturen (frame structure) in den FIGUREN 1 und 2 dargestellt sind.

Im Downlink (Funkverbindung von der Basisstation zur Mobilstation) des WCDMA/FDD Systems von ETSI bzw. ARIB wird der Dedicated Physical Control Channel (DPCCH) und der Dedicated Physical Data Channel (DPDCH) zeitlich gemultiplext, während im Uplink ein I/Q-Multiplex stattfindet, bei dem der DPDCH im I-Kanal und der DPCCH im Q-Kanal übertragen werden.

Der DPCCH enthält $N_{pilot}$ Pilot-Bits zur Kanalschätzung, $N_{TPC}$ Bits für eine schnelle Leistungsregelung und $N_{TFI}$ Format-Bits, die die Bitrate, Art des Services, Art der Fehlerschutzcodierung, etc. anzeigen (TFI = Traffic Format Indicator).

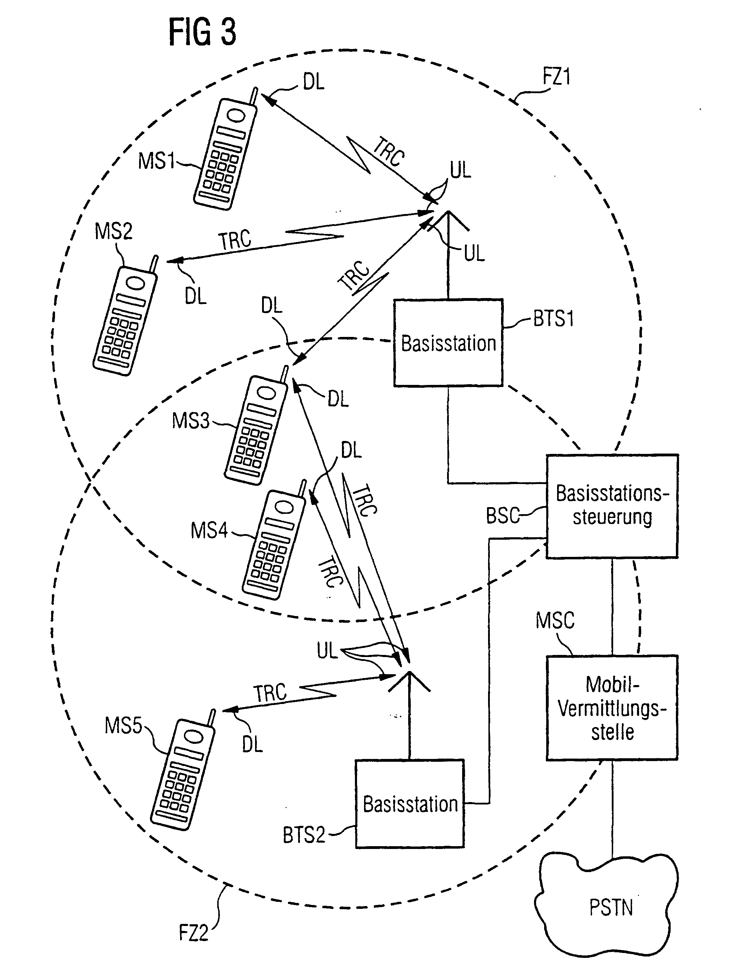

FIGUR 3 zeigt auf der Basis eines GSM-Funkszenarios mit z.B. zwei Funkzellen und darin angeordneten Basisstationen (Base Transceiver Station), wobei eine erste Basisstation BTS1 (Sender/Empfänger) eine erste Funkzelle FZ1 und eine zweite Basisstation BTS2 (Sende-/Empfangsgerät) eine zweite Funkzelle FZ2 omnidirektional "ausleuchtet", ein FDMA/TDMA/CDMA-Funkszenario, bei dem die Basisstationen BTS1, BTS2 über eine für das FDMA/TDMA/CDMA-Funkszenario ausgelegte Luftschnittstelle mit mehreren in den Funkzellen FZ1, FZ2 befindlichen Mobilstationen MS1...MS5 (Sende-/Empfangsgerät) durch drahtlose uni- oder bidirektionale - Aufwärtsrichtung UL (Up Link) und/oder Abwärtsrichtung DL (Down Link) - Telekommunikation auf entsprechende Übertragungkanäle TRC (Transmission Channel) verbunden bzw. verbindbar sind. Die Basisstationen BTS1, BTS2 sind in bekannter Weise (vgl. GSM-Telekommunikationssystem) mit einer Basisstationssteuerung BSC (BaseStation Controller) verbunden, die im Rahmen der Steuerung der Basisstationen die Frequenzverwaltung und Vermittlungsfunktionen übernimmt. Die Basisstationssteuerung BSC ist ihrerseits über eine Mobil-Vermittlungsstelle MSC (Mobile Switching Center) mit dem übergeordneten Telekommunikationsnetz, z.B. dem PSTN (Public Switched Telecommunication Network), verbunden. Die Mobil-Vermittlungsstelle MSC ist die Verwaltungszentrale für das dargestellte Telekommunikationssystem. Sie übernimmt die komplette Anrufverwaltung und mit angegliederten Registern (nicht dargestellt) die Authentisierung der Telekommunikationsteilnehmer sowie die Ortsüberwachung im Netzwerk.

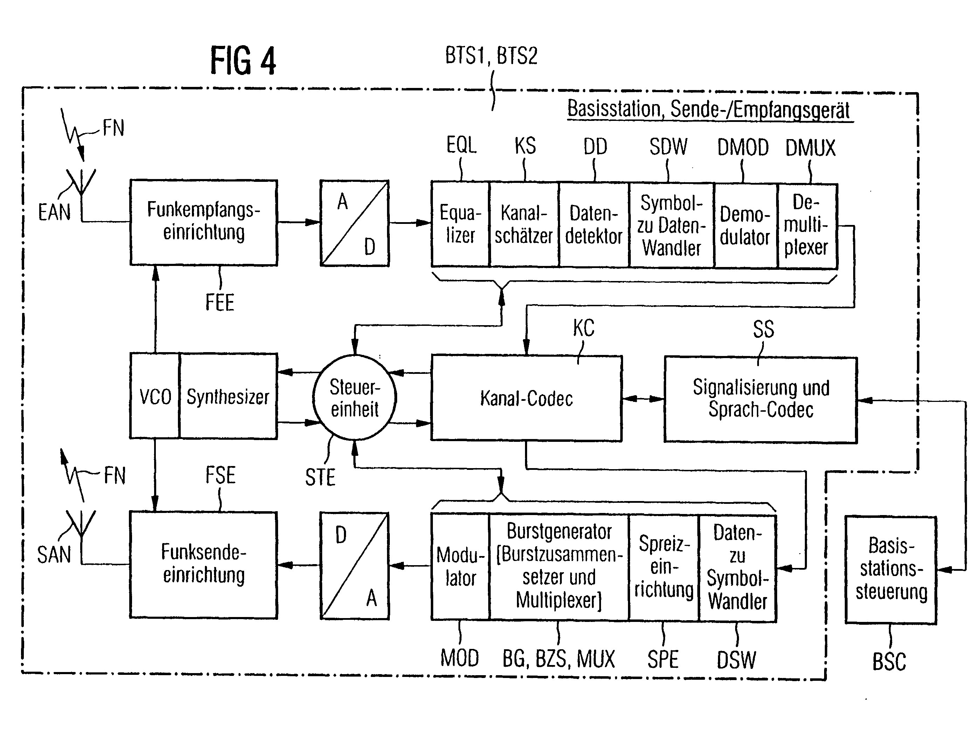

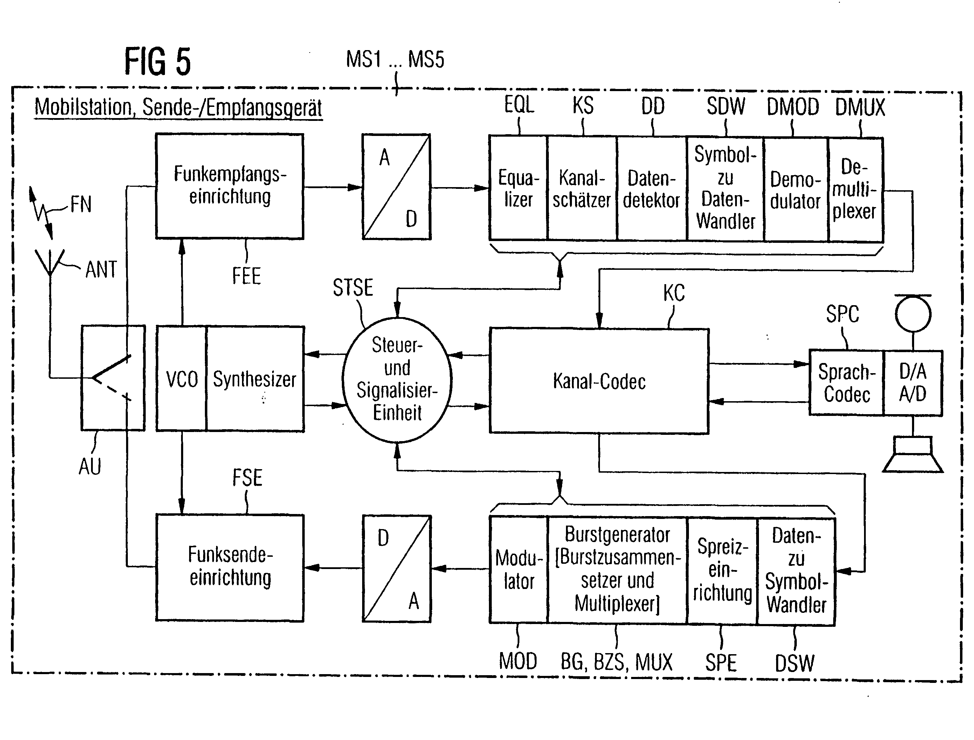

FIGUR 4 zeigt den prinzipiellen Aufbau der als Sende-/Empfangsgerät ausgebildeten Basisstation BTS1, BTS2, während FIGUR 5 den prinzipiellen Aufbau der ebenfalls als Sende-/Empfangsgerät ausgebildeten Mobilstation MT1...MT5 zeigt. Die Basisstation BTS1, BTS2 übernimmt das Senden und Empfangen von Funknachrichten von und zur Mobilstation MTS1..MTS5, während die Mobilstation MT1...MT5 das Senden und Empfangen von Funknachrichten von und zur Basisstation BTS1, BTS2 übernimmt. Hierzu weist die Basisstation eine Sendeantenne SAN und eine Empfangsantenne EAN auf, während die Mobilstation MT1...MT5 eine durch eine Antennenumschaltung AU steuerbare für das Senden und Empfangen gemeinsame Antenne ANT aufweist. In der Aufwärtsrichtung (Empfangspfad) empfängt die Basisstation BTS1, BTS2 über die Empfangsantenne EAN beispielsweise mindestens eine Funknachricht FN mit einer FDMA/TDMA/CDMA-Komponente von mindestens einer der Mobilstationen MT1...MT5, während die Mobilstation MT1...MT5 in der Abwärtsrichtung (Empfangspfad) über die gemeinsame Antenne ANT beispielsweise mindestens eine Funknachricht FN mit einer FDMA/TDMA/CDMA-Komponente von mindestens einer Basisstation BTS1, BTS2 empfängt. Die Funknachricht FN besteht dabei aus einem breitbandig gespreizten Trägersignal mit einer aufmodulierten aus Datensymbolen zusammengesetzten Information.

In einer Funkempfangseinrichtung FEE (Empfänger) wird das empfangene Trägersignal gefiltert und auf eine Zwischenfrequenz heruntergemischt, die ihrerseits im weiteren abgetastet und quantisiert wird. Nach einer Analog/Digital-Wandlung wird das Signal, das auf dem Funkweg durch Mehrwegeausbreitung verzerrt worden ist, einem Equalizer EQL zugeführt, der die Verzerrungen zu einem großen Teil ausgleicht (Stw.: Synchronisation).

Anschließend wird in einem Kanalschätzer KS versucht die Übertragungseigenschaften des Übertragungskanals TRC auf dem die Funknachricht FN übertragen worden ist, zu schätzen. Die Übertragungseigenschaften des Kanals sind dabei im Zeitbereich durch die Kanalimpulsantwort angegeben. Damit die kanalimpulsantwort geschätzt werden kann, wird der Funknachricht FN sendeseitig (im vorliegenden Fall von der Mobilstation MT1...MT5 bzw. der Basisstation BTS1, BTS2) eine spezielle, als Trainingsinformationssequenz ausgebildete Zusatzinformation in Form einer sogenannten Mitambel zugewiesen bzw. zugeordnet.

In einem daran anschließenden für alle empfangenen Signale gemeinsamen Datendetektor DD werden die in dem gemeinsamen Signal enthaltenen einzelnen mobilstationsspezifischen Signalanteile in bekannter Weise entzerrt und separiert. Nach der Entzerrung und Separierung werden in einem Symbol-zu-Daten-Wandler SDW die bisher vorliegenden Datensymbole in binäre Daten umgewandelt. Danach wird in einem Demodulator DMOD aus der Zwischenfrequenz der ursprüngliche Bitstrom gewonnen, bevor in einem Demultiplexer DMUX die einzelnen Zeitschlitze den richtigen logischen Kanälen und damit auch den unterschiedlichen Mobilstationen zugeordnet werden.

In einem Kanal-Codec KC wird die erhaltene Bitsequenz kanalweise decodiert. Je nach Kanal werden die Bitinformationen dem Kontroll- und Signalisierungszeitschlitz oder einem Sprachzeitschlitz zugewiesen und - im Fall der Basisstation (FIGUR 4) - die Kontroll- und Signalisierungsdaten und die Sprachdaten zur Übertragung an die Basisstationssteuerung BSC gemeinsam einer für die Signalisierung und Sprachcodierung/decodierung (Sprach-Codec) zuständigen Schnittstelle SS übergeben, während - im Fall der Mobilstation (FIGUR 5) - die Kontroll- und Signalisierungsdaten einer für die komplette Signalisierung und Steuerung der Mobilstation zuständigen Steuer- und Signalisiereinheit STSE und die Sprachdaten einem für die Spracheingabe und -ausgabe ausgelegten Sprach-Codec SPC übergeben werden.

In dem Sprach-Codec der Schnittstelle SS in der Basisstation BTS1, BTS2 werden die Sprachdaten in einem vorgegebenen Datenstrom (z.B. 64kbit/s-Strom in Netzrichtung bzw. 13kbit/s-Strom aus Netzrichtung).

In einer Steuereinheit STE wird die komplette Steuerung der Basisstation BTS1, BTS2 durchgeführt.

In der Abwärtsrichtung (Sendepfad) sendet die Basisstation BTS1, BTS2 über die Sendeantenne SAN beispielsweise mindestens eine Funknachricht FN mit einer FDMA/TDMA/CDMA-Komponente an mindestens eine der Mobilstationen MT1...MT5, während die Mobilstation MT1...MT5 in der Aufwärtsrichtung (Sendepfad) über die gemeinsame Antenne ANT beispielsweise mindestens eine Funknachricht FN mit einer FDMA/TDMA/CDMA-Komponente an mindestens einer Basisstation BTS1, BTS2 sendet.

Der Sendepfad beginnt bei der Basisstation BTS1, BTS2 in FIGUR 4 damit, daß in dem Kanal-Codec KC von der Basisstationssteuerung BSC über die Schnittstelle SS erhaltene Kontroll- und Signalisierungsdaten sowie Sprachdaten einem Kontroll- und Signalisierungszeitschlitz oder einem Sprachzeitschlitz zugewiesen werden und diese kanalweise in eine Bitsequenz codiert werden.

Der Sendepfad beginnt bei der Mobilstation MT1...MT5 in FIGUR 5 damit, daß in dem Kanal-Codec KC von dem Sprach-Codec SPC erhaltene Sprachdaten und von der Steuer- und Signalisiereinheit STSE erhaltene Kontroll- und Signalisierungsdaten einem Kontroll- und Signalisierungszeitschlitz oder einem Sprachzeitschlitz zugewiesen werden und diese kanalweise in eine Bitsequenz codiert werden.

Die in der Basisstation BTS1, BTS2 und in der Mobilstation MT1...MT5 gewonnene Bitsequenz wird jeweils in einem Daten-zu-Symbol-Wandler DSW in Datensymbole umgewandelt. Im Anschluß daran werden jeweils die Datensymbole in einer Spreizeinrichtung SPE mit einem jeweils teilnehmerindividuellen Code gespreizt. In dem Burstgenerator BG, bestehend aus einem Burstzusammensetzer BZS und einem Multiplexer MUX, wird danach in dem Burstzusammensetzer BZS jeweils den gespreizten Datensymbolen eine Trainingsinformationssequenz in Form einer Mitambel zur Kanalschätzung hinzugefügt und im Multiplexer MUX die auf diese Weise erhaltene Burstinformation auf den jeweils richtigen Zeitschlitz gesetzt. Abschließend wird der erhaltene Burst jeweils in einem Modulator MOD hochfrequent moduliert sowie digital/analog umgewandelt, bevor das auf diese Weise erhaltene Signal als Funknachricht FN über eine Funksendeeinrichtung FSE (Sender) an der Sendeantenne SAN bzw. der gemeinsamen Antenne ANT abgestrahlt wird.

Das Problem des Vielfachempfangs, des sogenannten "delay spreads", bei Vorhandensein von Echos kann bei CDMA-basierten Systemen trotz der großen Breitbandigkeit und der sehr kleinen Chip- bzw. Bitzeiten dieser Systeme gelöst werden, indem die empfangenen Signale zur Erhöhung der Detektionssicherheit miteinander kombiniert werden. Hierzu müssen natürlich die Kanaleigenschaften bekannt sein. Zu deren Bestimmung dient eine allen Teilnehmern gemeinsame Pilotsequenz (vgl.: FIGUREN 1 und 2), die zusätzlich ohne Modulation durch eine Nachrichtensequenz eigenständig und mit erhöhter Sendeleistung ausgestrahlt wird. Der Empfänger gewinnt aus ihrem Empfang die Information, wie viele Pfade an der augenblicklichen Empfangssituation beteiligt sind und welche Verzögerungszeiten dabei entstehen.

In einem "RAKE"-Empfänger werden die über die einzelnen Pfade einlaufenden Signale in getrennten Empfängern, den "Fingern" des "RAKE"-Empfängers erfaßt, detektiert und in einem Additionsglied nach dem Ausgleich der Verzögerungszeiten und den Phasenverschiebungen der Echos, untereinander gewichtet, aufsummiert.

Ein "RAKE"-Empfänger wird insbesondere zur Rückgewinnung digitaler Daten aus einem eine, CDMA-Komponente aufweisendes Funkempfangssignal benutzt. Die über eine Mehrwegeausbreitung überlagerten und durch den Kanal verzerrten Signale werden dabei zurückgewonnen und die Symbol-Energien der einzelnen Ausbreitungspfade akkumuliert.

Die Theorie zum "RAKE"-Empfänger ist hinreichend untersucht und bekannt (vgl. J.G. Proakis: "Digital Communications"; McGraw-Hill, Inc; 3rd Edition, 1995; S. 728 bis 739 und K.D. Kammeyer: "Nachrichtenübertragung"; B:G. Teubner Stuttgart, 1996; S. 658 bis 669).

Die der Erfindung zugrundeliegende Aufgabe besteht darin, einen Rake-Empfänger für Telekommunikationssysteme mit drahtloser Telekommunikation zwischen mobilen und/oder stationären Sende-/Empfangsgeräten, insbesondere in Mobilfunksystemen der dritten Generation, anzugeben, der gegenüber bekannten Rake-Empfängern eine geringere Anzahl von Funktionsblöcken und/oder Logik-Gattern aufweist.

Diese Aufgabe wird durch die Merkmale des Patentanspruchs 1 gelöst.

Die der Erfindung zugrundeliegende Idee besteht darin, daß eine Pipeline-Architektur mit mehreren Pipeline-Stufen (Pipeline-Struktur) realisiert ist, in der die einzelnen Signalverarbeitungsschritte bzw. Rechenschritte wie am Fließband abgearbeitet werden. Hierdurch können insbesondere verwendete Hardware-Schaltungen im Zeitmultiplexverfahren genutzt werden.

Drei Pipeline-Stufen werden benutzt.Für den Fall, wenn bei den drei Pipeline-Stufen wegen unterschiedlicher Bearbeitungsgeschwindigkeiten in den Pipeline-Stufen kein unmittelbares "pipelining" möglich ist, wird die Bearbeitung in den Pipeline-Stufen durch zwei Register gepuffert.

In einer ersten Pipeline-Stufe werden die Daten - z.B. Chips bzw. Sub-Chips bei Überabtastung - aus einem Speicher - z.B. ein "Dual Port-RAM" (DP-RAM) gelesen. Um die Symbole der einzelnen Signalpfade phasen-richtig überlagern zu können *(Code-Combining),* sind die entsprechenden Pfad-Verzögerungen (Path Delays) zu berücksichtigen. Die Berechnung der Adressen erfolgt ebenfalls in der ersten Stufe. Die Verzögerungszeit wird in Form eines Offsets zu der aktuellen Adresse hinzuaddiert. Es gibt z.B. "L" Offsets, wobei "L" die Anzahl der "Finger" in dem "RAKE"-Empfänger entspricht und wobei in jedem Taktschritt ein anderer Offset benötigt wird. Der Zugriff auf den Speicher erfolgt also in jedem Taktschritt.

Des weiteren wird in dieser ersten Pipeline-Stufe der von mindestens einem Code-Generator erzeugte Code, der Spreizcode und/oder der zum Rückgängigmachen der Verwürfelung erforderliche Verwürfelungscode (Spreading-/Scrambling(Descrambling)-Code, mit dem aktuellen Wert aus dem "Dual Port-RAM" multipliziert. Diese Operation ist relativ einfach, da sie nur aus Vorzeichen-Operationen und im Falle von komplexen Scrambling-Codes aus zusätzlichen zwei Additionen besteht.

Darüber hinaus wird in der ersten Pipeline-Stufe das "Soft-Handover" abgewickelt. Im Fall des "Soft-Handover" empfängt der "BAKE'"-Empfänger von z.B. zwei Basisstationen Signale, die mit unterschiedlichen *Scrambling-* und *Spreading-Codes* gesendet worden sind. Die maximal mögliche Zahl von "RAKE-Fingern" ist entsprechend der Empfangsqualität auf die Basisstationen aufzuteilen. Deshalb wird eine von den "RAKE-Fingern" abhängige Umschaltung der Code-Generatoren durchgeführt. Der Multiplexer, der die Umschaltung durchführt, arbeitet mit maximal L* W MHz. Weitere Code-Generatoren können hinzugefügt werden um die Zahl der Basisstationen zu erhöhen.

In der zweiten Pipeline-Stufe wird jeder Wert mit einem Gewicht multipliziert. Diese Gewichte sind für jeden "Finger" unterschiedlich und verändern sich mit jedem Taktschritt. Sie werden im Prinzip nach "L" Schritten wiederholt. Bei einer Interpolation akkumulieren sich die Delta-Werte zu den Gewichten.

In der letzten dritten Pipeline-Stufe werden die Chip-Energien der einzelnen "RAKE-Finger" zur Symbol-Energie $U_{symb}$ akkumuliert.

$$U_{symb} = \sum_{i=1}^{SF} \sum_{j=1}^{L} u_{ij};$$

wobei SF = Spreizfaktor, L = Anzahl "RAKE - Finger" Vorteile und besondere Merkmale der "RAKE-Pipeline-Architektur"

1. Zeitliches Multiplexen der "RAKE-Pipeline-Architektur"

Bei den bekannten Architekturen wird jeder "Finger" des "RAKE"-Empfängers einzeln implementiert, die Chips zu Symbolen akkumuliert und zum Schluß die Summe über alle "Finger" gebildet. Dies führt bei "L" "Fingern" zu folgendem Hardwarebedarf:

- *L* +1 Addierer und
- 2 * *L* Multiplizierer (komplexe Multiplikation)

Wird die Signalverarbeitungskette für einen "RAKE-Finger" als Pipeline aufgebaut, so kann ein einziger "pipelined RAKE-Finger" einen kompletten "RAKE"-Empfänger im Zeitmultiplexverfahren nachbilden. Dies ist nur durch die Zahl der "Finger" und die maximale Taktrate der verfügbaren Technologie begrenzt. Damit reduziert sich der Aufwand auf

- 1 Addierer,
- 2 Multiplizierer und
- b+2*m zusätzliche Register,

wobei "b". Zahl der maximal an dem "Soft-Handover" beteiligten Basisstationen und "m" die Zahl der nachzuführenden "Finger" für das "Early-Late Tracking" sind.

2. Code-Combing über "Dual Port-RAM"-Zugriffe

Um die Symbole der einzelnen Signalpfade phasen-richtig überlagern zu können (*Code-Combining*), sind die entsprechenden "Path-Delays" zu berücksichtigen. Verschiedene bekannte Lösungsansätze verwenden hierfür Schieberegister und eine relativ aufwendige Multiplexer-Logik.

In dem vorgeschlagenen Lösungsansatz wird ein einfaches "Dual-Port-RAM (DP-RAM)" verwendet. Das Code-Combining erfolgt durch gezieltes Verwenden von Adress-Offsets, die dem Delay zwischen den unterschiedlichen Ausbreitungs-Pfaden entsprechen.

Anstelle des Dual Port-RAM lassen sich ebenfalls SRAMs, SDRAMs oder SSRAMs, die ein "DP-RAM" nachbilden, verwenden.

3. Interpolation der Gewichte

Um die Anzahl der Kanalschätzungen zur Berechnung der konjugiert komplexen Koeffizienten (Gewichte) zu verringern bzw. um deren geringere zeitliche Abweichung vom Idealwert zu erreichen, ist es möglich die Koeffizenten zwischen zwei Schätzungen mittels Interpolation zu bestimmen. Diese Vereinfachung bei der Kanalschätzung kann leicht in die Pipeline-Architektur integriert werden.

4. Early-Late Tracking der RAKE-Finger

Eine möglichst genaue Positionierung der "RAKE-Finger" ist Voraussetzung für akzeptable Bitfehlerraten. Mit Hilfe eines aufwendigen Anpassungsfilters, dem sogenannten "matched filter", wird die Position der einzelnen "RAKE-Finger" bestimmt. Die Länge des Kanals, die geforderte Genauigkeit bei der Positionierung der "Finger" und die Häufigkeit der vorgenommen Berechnungen bestimmen den Aufwand für den "matched filter". Eine ungenauere, initiale und in größeren Zeitintervallen vorgenommene Bestimmung der "Finger"-Position führen zu einer wesentlichen Verringerung des Aufwands für den "matched filter". Um der dadurch verursachten Degradation entgegenzuwirken wird das sogenannte "Early/Late-Tracking" verwendet. Die Postion des "Early-Finger" befindet sich ½ Chip vor und der "Late-Finger" ½ Chip nach dem zu positionierenden "RAKE-Finger" ("main-Finger"). Die Berechnung der Energien des "Early- und Late-Finger" erfolgt in der letzten Stufe des "RAKE"-Empfängers und erfordert nur einen geringen Aufwand. Sind die Energien der beiden "Finger" ≈ 0 - d.h. sie besitzen annähernd die gleiche, kleine Energie -, dann hat der eingeschlossene "Finger". Der "Main-Finger", eine fast optimale Position. Wenn die Energien der "Tracking-Finger" nicht annähernd gleich bzw. ≠ 0 sind, findet eine Neupositionierung im Raster "W/n" statt, wobei "W" die Chip-Frequenz und "n" die Oversampling-Rate sind.

5. "Soft-Handover"

Im "Soft-Handover" empfängt der "RAKE"-Empfänger von mehreren Basisstationen Signale, die mit unterschiedlichen Scrambling/Spreading Codes gesendet wurden. Die maximal mögliche Zahl von "RAKE-Fingern" ist entsprechend der Empfangsqualität auf die Basisstationen aufzuteilen. Deshalb ist eine von den "RAKE-Fingern" abhängige Umschaltung der Code-Generatoren notwendig. Der Multiplexer, der die Umschaltung durchführt, arbeitet mit maximal L * W MHz, wobei die "Early-/Late- Finger" berücksichtigt sind.

Während des "Soft-Handover" senden die beteiligten Basisstation der Mobilstation dieselben Benutzerdaten zu. Zur Kontrolle der Sendeleistung der Mobilstation erhält diese zusätzlich eine Information, das sogenannte TPC-Bit (Transfer-Power-Control; vgl.: FIGUREN 1 und 2), ob die Sendeleistung runter oder rauf zu regeln ist. Deshalb müssen die unterschiedlichen, basisstationsabhängigen TPC-Bits dekodiert werden. Der abschließende bzw. letzte Teil der Verarbeitungspipeline akkumuliert dazu Symbole, die TPC-Bits darstellen, nach empfangener Basisstation getrennt auf.

6. Flexiblität der Architektur bzgl. Wortbreiten, Taktraten und Parallelisierung

Je nach Anwendungsbereich und geforderter Qualität (z.B. Bit-Error-Rate) der Kommunikationsverbindung (Daten, Sprache, usw.) sind eine unterschiedliche Zahl von "RAKE-Fingern" und Wortbreiten im Signalverarbeitungspfad notwendig. Die vorgeschlagene Architektur läßt eine einfache Anpassung zu. Höhere Wortbreiten erfordern bei gleicher Technologie geringere Taktraten der einzelnen Verarbeitungseinheiten. Ohne großen Schaltungsaufwand treiben zu müssen, läßt sich die Verarbeitungsleistung der "RAKE-Pipeline-Architektur" durch das Einfügen paralleler Verarbeitungszweige erhöhen Dadurch sind höhere Taktraten möglich.

Bei der Implementierung eines "RAKE"-Empfängers in Hard- und/oder Software lassen sich jedoch durch geeignete Abbildungen in Software bzw. Hardware Einsparungen bezüglich der verwendeten Zahl von Funktionsblöcken bzw. deren Komplexität und eine höhere Flexibilität bei der Parametrierung - z.B. Anzahl der "RAKE-Finger" - erzielen.

Die Verfügbarkeit schneller Technologien im Bereich des Chip-Designs (z.B. ASIC, FPGA) gestattet es zudem, wesentliche Teile der Hardware im Zeitmultiplexverfahren zu nutzen und somit die notwendige Zahl von Logik-Gattern zu reduzieren.

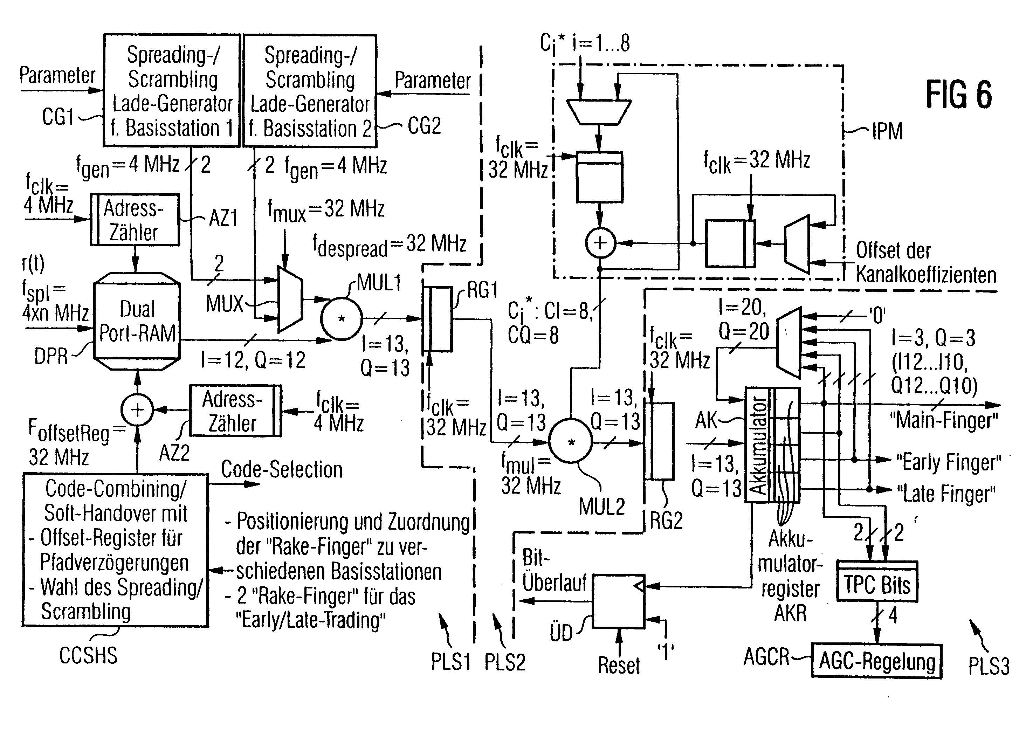

Ein Ausführungsbeispiel der Erfindung wird anhand der FIGUR 6 erläutert.

FIGUR 6 zeigt in einem Blockschaltbild die Pipeline-Architektur eines "RAKE"-Empfängers.

FIGUR 6 zeigt "RAKE-Empfänger" mit einer Pipeline-Architektur, bestehend aus drei Pipeline-Stufen, einer ersten Pipeline-Stufe PLS1, einer zweiten Pipeline-Stufe PLS2 und einer dritten Pipeline-Stufe PLS3, für L=8 "Finger", Soft-Handover mit zwei Basisstationen und "Early-Late Tracking". Die dargestellt Pipeline-Strutur ist für einen "Finger" ausgelegt, wobei aber nacheinander alle "Finger" nachgeführt werden können. Die angegebenen Taktraten beziehen sich auf den so spezifizierten "RAKE"-Empfänger und sind deshalb ein Vielfaches der Chip-Frequenz von 4.096 MChip. Die angegebenen Wortbreiten innerhalb der Signalverarbeitungskette sind aus den Randbedingungen zur UMTS-Standardisierung abgeleitet (vgl. *SMG2 UMTSPhysical Layer Expert Group: "UTRA Physical Layer Description FDD Parts" Vers. 0.4, 1998-06-25)*.

Die beschriebene Architektur läßt sich prinzipiell auf eine andere Chip-Frequenz "W", auf eine beliebige "Fingeranzahl L", auf "b" mögliche Basisstationen beim "Soft-Handover" und 2*L "Finger" für das "Early-Late Tracking" erweitern. Ebenfalls ist die Architektur flexible bzgl. der Wahl der verwendeten Wortbreiten im Signalverarbeitungspfad.

In einem "Dual Port-RAM" (DP-RAM) DPR wird das Empfangssignal r(t) mit einer Frequenz von 4.096 * n MHz geschrieben (n ist dabei die Oversampling-Rate). Die Adressen zum Speichern der Eingangsdaten (Chips) in das "Dual Port-RAM" DPR generiert ein erster Adresszähler AZ1.

Zum Auslesen der empfangenen Chips aus dem "Dual Port-RAM" DPR wird aus der Addition eines freilaufenden zweiten Adresszählers AZ2 und der vom "RAKE-Finger" abhängigen Offsets eine Adresse (8 * 4.096 Mhz Takt ) berechnet. Die Offsets befinden sich in Offset-Registern. Für das zu implementierende "Early/Late Finger-Tracking" lassen sich zwei der Offset-Register zur Positionierung des "Early- und des Late-Finger" benutzen. Die ausgelesenen Daten werden zur Rückgewinnung der Symbole in einem ersten Multiplizierer MUL1 mit einem von mindestens einem Code-Generator - in FIGUR 6 zwei Code-Generatoren CG1, CG2 - erzeugten Spreizcode und/oder einem zum Rückgängigmachen der Verwürfelung erforderliche Verwürfelungscode (Spreading-/Scrambling(Descrambling)-Code multipliziert. Hierbei handelt es sich bei einfachen Codes um eine Vorzeichen-Operation, während bei komplexen Codes eine zusätzlich Addition hinzukommt.

Im "Soft-Handover"-Fall empfängt der "RAKE"-Empfänger von z.B. zwei Basisstationen, Basisstation 1 und Basisstation 2, Signale, die mit unterschiedlichen Scrambling/Spreading-Codes gesendet wurden. Die maximal mögliche Zahl von "RAKE-Finger" ist entsprechend der Empfangsqualität auf die Basisstationen aufzuteilen. Die Wahl der Scrambling/Spreading-Codes findet in einer "Code Combining/Soft-Handover"-Schaltung CCSHS statt. Deshalb ist eine von den "RAKE-Fingern" abhängige Umschaltung der Code-Generatoren CG1, CG2 notwendig. Ein Multiplexer MUX, der die Umschaltung durchführt, arbeitet in diesem Beispiel mit maximal 8 * 4.096 MHz. Außerdem werden in dies Schaltung CCSHS zur phasen-richtigen Überlagerung der Symbole der einzelnen Signalpfade zu können (*Co-*

*de-Combining*) die entsprechenden Pfad-Verzögerungen (Path-Delays) berücksichtigt.

Der zur Übertragung notwendige Kanal verzerrt das Signal. Der Kanalschätzer berechnet in der zweiten Pipeline-Stufe PLS2 aus der empfangenen Pilot-Sequenz die zur Korrektur der Verzerrung notwendigen konjugiert komplexen Kanal-Koeffizienten (Gewichte). Der Empfänger multipliziert deshalb in einem zweiten Multiplizierer MUL2 die zurück gewonnenen Symbole der einzelnen "RAKE-Finger" mit ihren Gewichten $C_i^*$ . Diese Gewichte sind in einem Ringspeicher abgelegt.

Um eine häufige Schätzung des Kanals zu vermeiden, weil es sich hierbei um einen rechenintensiver Prozess handelt, und um eine geringere zeitliche Abweichung der Koeffizienten vom Idealwert zu erreichen, findet in Interpolationsmitteln IPM eine Interpolation der Gewichte zwischen zwei Schätzungen statt. Dabei kommt es zu einem ständigen Aufaddieren von Delta-Werten.

In der letzten Pipeline-Stufe, der dritten Pipeline-Stufe PLS3, werden über den Zeitraum eines Symbols nacheinander die Chip-Energien der einzelnen "Finger" und damit die zu einem Symbol gehörenden Pegel in einem Akkumulator AK akkumuliert. Symbole, die TPC-Bits (Transfer-Power-Control) darstellen, müssen nach empfangener Basisstation getrennt, akkumuliert werden. Nach jedem Symbol ist der Akkumulator AK zurückzusetzen.

Für das "Early-/Late-Tracking" müssen pro "Early-/Late-Finger" zusätzlich zwei separate Akkumulator-Register AKR bereitgestellt werden.

Für jeden Zeitschlitz wird Überlaufdetektor ÜD ein entstandener Bit-Überlauf registriert und zu Beginn des neuen Zeitschlitzs gelöscht.

Falls ein Überlauf eintritt muß einerer AGC-Regelung AGCR mitgeteilt werden, daß die Eingangsverstärkung abgesenkt werden muß.

Am Ausgang des "RAKE"-Empfängers liegt der Schätzwert des Symbols $\underline{U}_m$ vor.

Der folgende Ausdruck stellt die allgemeine Berechnung des Schätzwertes $\underline{U}_m$ eines empfangenen Symbols dar:

$$\underline{U}_m = \int_0^T \underline{r}(t) * \sum_{n=1}^L \underline{c}_n(t) * \underline{q}(t - n / W) dt$$

Dabei ist r(t) das Empfangssignal, $\underline{c}_n(t)$ das Gewicht und q(t) der Spreading/Scrambling-Code. "L" beschreibt die Anzahl der "RAKE-Finger" und "1/W" ist die Dauer eines Chips.

In der dargestellten Pipeline-Struktur mit den drei Pipeline-Stufen PLS1...PLS3 sind, weil wegen unterschiedlicher Bearbeitungsgeschwindigkeiten in den Pipeline-Stufen kein unmittelbares "pipelining" möglich ist, zwischen den Pipeline-Stufen zur Datenpufferung zwei Register RG1, RG2 geschaltet.

## Patentansprüche

1. Rake-Empfänger für Telekommunikationssysteme mit drahtloser Telekommunikation zwischen mobilen und/oder stationären Sende-/Empfangsgeräten mit

   einer Pipeline-Architektur mit drei Pipeline-Stufen (PLS 1 ... PLS3), in denen die einzelnen Signalverarbeitungsschritten bzw. Rechenschritte nacheinander wie am Fließband abgearbeitet werden,
   **dadurch gekennzeichnet, daß**
   zwischen den Pipeline-Stufen (PLS1 ... PLS3) Register (RG1, RG2) zur Datenpufferung vorhanden sind,
   ein Dual-Port-RAM (DPR), das in einem Zeitmultiplexverfahren nutzbar ist, in der ersten Pipeline-Stufe (PLS1) vorhanden ist,
   wobei diese erste Pipeline-Stufe derart konfiguriert ist, daß
   zum Auslesen empfangener Chips aus dem Dual-Port-RAM (DPR) eine Adresse durch Hinzuaddieren des Wertes eines freilaufenden Adresszählers zu Rake-Finger abhängigen Off-Sets berechnet wird,
   mit Interpolationsmitteln (IPM), die eine Bestimmung konjugiert komplexer Koeffizienten mittels Interpolation zwischen zwei Kanalschätzungen gestatten, in einer zweiten Pipeline-Stufe (PLS2),
   mit einem Akkumulator (AK) und einem Akkumulator Register (AKR) für ein Early/Late-Tracking der Rake-Finger in der dritten Pipeline-Stufe (PLS3).

2. Rake-Empfänger nach Anspruch 1, **dadurch gekennzeichnet, daß**
   in der ersten Pipeline-Stufe (PLS1) eine erste Hardware-Schaltung (CCSHS) vorhanden ist, die das "Soft-Handover" unterstützt.

3. Rake-Empfänger nach einem der Ansprüche 1 oder 2, **dadurch gekennzeichnet, daß**
   in der ersten Pipeline-Stufe (PLS1) eine zweite Hardware-Schaltung (CCSHS) vorhanden ist, die ein "Code-Combining" ermöglicht.

4. Rake-Empfänger nach einem der Ansprüche 1 bis 3, **dadurch gekennzeichnet, daß**
   die Pipeline-Architektur durch das Einfügen von parallelen Verarbeitungszweigen flexibel an Wortbreiten und Taktraten anpassbar ist.

## Claims

1. Rake receiver for telecommunication systems with wire-free telecommunication between mobile and/or stationary transceivers having

   a pipeline architecture with three pipeline stages (PLS1 ... PLS3) in which the individual signal processing steps or computing steps are processed one after the other as on a conveyor belt,
   **characterized in that**
   registers (RG1, RG2) for data buffering are provided between the pipeline stages (PLS1 ... PLS3),
   a dual-port RAM (DPR) which can be used in a time-division multiplexing method is provided in the first pipeline stage (PLS1), with this first pipeline stage being configured such that an address for reading received chips from the dual-port RAM (DPR) is calculated by adding the value of a free-running address counter to offsets which are dependent on the rake finger,
   having interpolation means (IPM) which allow determination of complex-conjugate coefficients by means of interpolation between two channel estimates, in a second pipeline stage (PLS2),
   having an accumulator (AK) and having an accumulator register (AKR) for early/late tracking of the rake fingers in the third pipeline stage (PLS3).

2. Rake receiver according to Claim 1, **characterized in that** a first hardware circuit (CCSHS) which supports soft handovers is provided in the first pipeline stage (PLS1).

3. Rake receiver according to one of Claims 1 or 2, **characterized in that**
   a second hardware circuit (CCSHS) which allows code combining is provided in the first pipeline stage (PLS1).

4. Rake receiver according to one of Claims 1 to 3; **characterized in that**
   the pipeline architecture can be flexibly matched to word lengths and clock rates by the insertion of parallel processing paths.

## Revendications

1. Récepteur rake pour des systèmes de télécommunication avec télécommunication sans fil entre des appareils émetteurs/récepteurs mobiles et/ou stationnaires,

   avec une architecture pipeline ayant trois niveaux de pipeline (PLS1 à PLS3) dans lesquels les différentes étapes de traitement de signal ou de calcul sont exécutées successivement comme un travail à la chaîne,
   **caractérisé par le fait que**

   - il y a entre les niveaux de pipeline (PLS1 à PLS3) des registres (RG1, RG2) pour la mémorisation temporaire de données,

- il y a dans le premier niveau de pipeline (PLS1) une Dual-Port RAM (DPR) qui est exploitable avec un procédé de multiplexage temporel,

ce premier niveau de pipeline (PLS1) étant configuré de telle sorte que, pour la lecture d'éléments reçus dans la Dual-Port RAM (DPR), une adresse est calculée en ajoutant la valeur d'un compteur d'adresse tournant librement à des décalages dépendant de doigts rake,

et **caractérisé par** des moyens d'interpolation (IPM) qui permettent une détermination de coefficients complexes conjugués au moyen d'une interpolation entre deux estimations de canal, dans un deuxième niveau de pipeline (PLS2),

et par un accumulateur (AK) et un registre d'accumulateur (AKR) pour un Early/Late Tracking des doigts rake dans le troisième niveau de pipeline (PLS3).

2. Récepteur rake selon la revendication 1, **caractérisé par le fait qu'**il y a dans le premier niveau de pipeline (PLS1) un premier circuit matériel (CCSHS) qui réalise le "Soft-Handover".

3. Récepteur rake selon l'une des revendications 1 ou 2, **caractérisé par le fait qu'**il y a dans le premier niveau de pipeline (PLS1) un deuxième circuit matériel (CCSHS) qui permet un "Code-Combining".

4. Récepteur rake selon l'une des revendications 1 à 3, **caractérisé par le fait que** l'architecture pipeline est adaptable de manière flexible à des largeurs de mots et à des fréquences d'horloge grâce à l'insertion de branches de traitement parallèles.

# FIG 1

|  |  |  | |
|---|---|---|---|
| DPCCH | | | DPDCH |

| Pilot $N_{pilot}$ bits | TPC $N_{TPC}$ bits | TFI $N_{TFI}$ bits | Data $N_{data}$ bits |
|---|---|---|---|

0.625 ms, $20 * 2^k$ bits (k = 0..6)

| Slot #1 | Slot #2 | | Slot #i | | Slot #16 |
|---|---|---|---|---|---|

$T_r = 10$ ms

| Frame #1 | Frame #2 | | Frame #i | | Frame #72 |
|---|---|---|---|---|---|

$T_{super} = 720$ ms

EP 1 125 370 B1

# FIG 2

DPDCH — | Data $N_{data}$ bits |

DPCCH — | Pilot $N_{pilot}$ bits | TPC $N_{TPC}$ bits | TFI $N_{TFI}$ bits |

0.625 ms, $10*2^k$ bits (k=0..6)

| Slot #1 | Slot #2 | Slot #i | Slot #16 |

$T_r = 10$ ms

| Frame #1 | Frame #2 | Frame #i | Frame #72 |

$T_{super} = 720$ ms

EP 1 125 370 B1

# FIG 3

# FIG 4

BTS1, BTS2

Basisstation, Sende-/Empfangsgerät

EP 1 125 370 B1

# FIG 5

MS1 ... MS5

Mobilstation, Sende-/Empfangsgerät

EQL    KS    DD    SDW    DMOD    DMUX

| Funkempfangs-einrichtung | | A / D | | Equa-lizer | Kanal-schätzer | Daten-detektor | Symbol-zu Daten-Wandler | Demo-dulator | De-multi-plexer |

FN

ANT

FEE

STSE

VCO | Synthesizer

Steuer- und Signalisier-Einheit

Kanal-Codec

KC

SPC

Sprach-Codec | D/A A/D

AU

FSE

MOD    BG, BZS, MUX    SPE    DSW

| Funksende-einrichtung | | D / A | | Modu-lator | Burstgenerator [Burstzusammen-setzer und Multiplexer] | Spreiz-ein-richtung | Daten-zu Symbol-Wandler |

EP 1 125 370 B1

FIG 6

Parameter
CG1

Spreading-/ Scrambling Lade-Generator f. Basisstation 1

Spreading-/ Scrambling Lade-Generator f. Basisstation 2

Parameter
CG2

$C_i^* \; i=1...8$

IPM

$f_{gen}=4$ MHz

2

2 $f_{gen}=4$ MHz

$f_{clk}=$ 32 MHz

$f_{clk}=32$ MHz

$f_{clk}=$ 4 MHz

Adress-Zähler

AZ1

$f_{mux}=32$ MHz

$f_{despread}=32$ MHz

r(t)

$f_{spl}=$ 4xn MHz

2

MUX

MUL1

RG1

$C_i^*$: CI=8, CQ=8

Offset der Kanalkoeffizienten

Dual Port-RAM

DPR

I=12, Q=12

I=13, Q=13

I=20, Q=20

'0'

I=3, Q=3 (I12...I10, Q12...Q10)

$F_{offsetReg}=$ 32 MHz

Adress-Zähler

$f_{clk}=$ 4 MHz

AZ2

Code-Selection

Code-Combining/ Soft-Handover mit
- Offset-Register für Pfadverzögerungen
- Wahl des Spreading/ Scrambling

CCSHS

- Positionierung und Zuordnung der "Rake-Finger" zu ver-schiedenen Basisstationen
- 2 "Rake-Finger" für das "Early/Late-Trading"

$f_{clk}=$ 32 MHz

I=13, Q=13

$f_{mul}=$ 32 MHz

MUL2

I=13, Q=13

$f_{clk}=$ 32 MHz

I=13, Q=13

RG2

AK

Akkumulator

AKR

Akku-mulator-register

"Main-Finger"

"Early Finger"

"Late Finger"

2 2

TPC Bits

4

Bit-Überlauf

ÜD

Reset

'1'

PLS1 PLS2

AGCR

AGC-Regelung

PLS3

EP 1 125 370 B1